# EUROPEAN PATENT APPLICATION

(11) **EP 4 668 503 A1**
(43) Date of publication of application: **24.12.2025**
(21) Application number: 24183132.0
(22) Date of filing: 19.06.2024
(51) Int. Cl.: H01S 3/02, H01S 3/036, H01S 3/07, H01S 3/23, H05G 2/00

(54) **OPTICAL AMPLIFIER FOR A DRIVE LASER FOR USE IN A LITHOGRAPHY SYSTEM, LITHOGRAPHY SYSTEM AND METHOD FOR INSTALLING AN OPTICAL AMPLIFIER**

(71) Applicant: TRUMPF Lasersystems for Semiconductor Manufacturing SE, 71254 Ditzingen (DE); ASML Netherlands B.V., 5504 DR Veldhoven (NL)
(72) Inventor: SIEGLE, Tobias, 71254 Ditzingen (DE); FRÖHLICH, Sascha, 70469 Stuttgart (DE); GESCHWANDNER, Mark, 70825 Korntal-Münchingen (DE); STRUYCKEN, Alexander Matthijs, 5629 Eindhoven (NL); LANSBERGEN, Rob, 5504 DR Veldhoven (NL); JANSSEN, Toni Wil, 6005 NX Weert (NL)
(74) Representative: Prescher, Gordian

(57) **Abstract**

The present invention concerns an optical amplifier (2) for a drive laser (100) for use in a lithography system (101), in particular an extreme ultraviolet lithography system, with a base frame (400) and with an optics frame (200) to which optical cavities, and optionally beam guiding elements, are attached, wherein the optics frame (200) has a virtual centre plane (C) that is arranged essentially horizontally, wherein the optics frame (200) is supported on the base frame (400) via at least three supports (202, 203, 204) each that are arranged at a point within the virtual centre plane (C) of the optics frame (200). The present invention further concerns a lithography system (101), in particular extreme ultraviolet lithography system, comprising a drive laser (100) with an optical amplifier (200) as mentioned before.

## Description

The invention concerns an optical amplifier for a drive laser for use in a lithography system, in particular an extreme ultraviolet lithography system, with a base frame and with an optics frame to which optical cavities, and optionally beam guiding elements, are attached, wherein the optics frame has a virtual centre plane that is arranged essentially horizontally. The invention further concerns a lithography system, in particular an extreme ultraviolet lithography system. The invention further concerns a method for installing an optical amplifier for a drive laser for use in a lithography system, in particular an extreme ultraviolet lithography system.

The invention can be applied in the field of drive laser systems for use in extreme ultraviolet (EUV) lithography. Those drive laser systems typically include a laser source for generating pulsed laser radiation and one or more optical amplifiers for amplifying the pulsed laser radiation. Generally, the optical amplifiers include cavities that are filled with a laser gas, e.g., a mixture comprising CO₂, N₂ and He. The laser gas may be excited by radio-frequency (RF) signals applied to the laser gas using electrodes.

Optical beam guiding elements like mirrors are employed to guide the laser radiation from one cavity to the other or from the drive laser to a focussing device. The cavities as well as the optical beam guiding elements like mirrors are typically mounted to an optics frame. As deformations or vibrations of the optics frame may lead to displacements and/or rotations of beam guiding elements and thus may cause the laser beam to drift, it is known to decouple the optics frame from vibrating components of the overall system. For example, prior art document US 2005/0271110 A1 discloses an optical amplifier for a drive laser wherein an optics frame with optical components mounted thereto is separately suspended from vibrating components like a laser discharge unit.

Against this background, the problem underlying the invention is to further suppress beam drift in drive lasers for EUV lithography.

According to an aspect of the **invention**, an optical amplifier for a drive laser for use in a lithography system, in particular an extreme ultraviolet lithography system, is disclosed, the optical amplifier comprising a base frame and an optics frame to which optical cavities, and optionally beam guiding elements, are attached, wherein the optics frame has a virtual centre plane that is arranged essentially horizontally, wherein the optics frame is supported on the base frame via at least three supports that each are arranged at a point within the virtual centre plane of the optics frame.

The virtual centre plane of the optics frame is considered to be a plane that includes the centre of gravity of the optics frame. Preferably, the virtual centre plane divides the optics frame into two halves of essentially the same size and/or mass. The optical cavities are preferably attached to the optics frame at positions below and above the virtual centre plane. In case beam guiding elements are attached to the optics frame, those are preferably attached to the optics frame at positions below and above the virtual centre plane. The inventors realized that the inventive arrangement wherein the at least three supports are arranged within the virtual centre plane of the optics frame may drastically reduce the risk of rotation of the optics frame due to mechanically induced deformations and/or vibrations. Thus, the stability of the positioning of the laser beam can be improved and laser beam drift can be reduced.

For the purpose of this disclosure the term "horizontally" is considered to mean vertically to the force of gravity of planet earth. In particular, the term "horizontally" is be considered to indicate orientation parallel to the ground the base frame is situated on.

The optics frame may comprise, in particular consist of, a metal, e.g., aluminium or steel, or a polymer or composite material. The base frame may comprise, in particular consist of, a metal, e.g., aluminium or steel, or a polymer or composite material.

According to a preferred embodiment of the invention, the at least three supports comprise exactly one pinned support. The pinned support is configured to block translational movements of the optics frame with respect to the base frame in all three directions but allows rotations about all three directions. The pinned support increases the stiffness of the connection between the optics frame and the base frame. This leads to increased laser beam stability.

According to a preferred embodiment of the invention, the optics frame comprises an interface section that is configured to couple laser radiation in and out, wherein the pinned support is arranged nearby or in the interface section. The interface section of the optical amplifier may include a beam inlet window and a beam outlet windows that are arranged nearby. This embodiment has the technical advantage that deformations of the optics frame in the interface section can be reduced.

According to a preferred embodiment of the invention, the at least three supports comprise two supports that allow translational movement of the optics frame with respect to the base frame within the virtual centre plane. Thereby, undesirable deformations due to bending of the optics frame between pinned or fixed supports can be avoided. Instead, the optics frame is free to translationally move at said two supports. Because movement of the optics frame with respect to the base frame is only allowed within the virtual centre plane, those movements do not significantly increase the beam drift. Said two supports may also allow rotational movement about all three directions.

According to a preferred embodiment of the invention, the two supports that allow translational movement of the optics frame with respect to the base frame within the virtual centre plane comprise one support that allows translational movement within the virtual centre plane only along one direction. Said support may also allow rotational movement about all three directions.

According to a preferred embodiment of the invention, the optical amplifier comprises a gas supply frame to which components for supplying laser gas to the optical cavities are attached, wherein the gas supply frame is supported on the base frame via supports separate from the at least three supports. Therefore, the transfer of parasitic forces from the gas supply frame to the optics frame is drastically reduced. Thus, undesirable deformations of the optics frame can be avoided and beam stability be increased. The components attached to the gas supply frame may include a gas cooler and/or a gas pump and/or a catalyst.

According to a preferred embodiment of the invention, the gas supply frame comprises an upper subframe arranged vertically above the optics frame and a lower subframe arranged vertically below the optics frame. This comes with the benefit that gas can be supplied to components attached at the optics frame, in particular to the cavities, from above and from below. Also, hot gas can be led away from the elements attached at the optics frame, in particular the cavities, to the above or to the below.

According to a preferred embodiment of the invention, a heat shielding element is arranged between the gas supply frame and the optics frame which is configured to reduce heating of the optics frame by direct convection and/or radiation. The heat shielding element may be attached to the gas supply frame or attached to the optics frame. The heat shielding element is preferably arranged in parallel to the virtual centre plane of the optics frame. Alternatively, the heat shielding element may also be arranged essentially vertical to the virtual centre plane of the optics frame. When referring to a parallel or vertical arrangement of the heat shielding element, this arrangement refers to a main or longitudinal axis of the heat shielding element with regard to the centre plane of the optics frame. Irrespective of the specific arrangement of the heat shielding element, it may be arranged on a top side, a bottom side or a front side of the optics frame in an intended configuration of the optics frame, whereby a front side may be any side that has a side surface.

According to a preferred embodiment of the invention, the heat shielding element is configured for being actively cooled. Thereby, the shielding effect may be increased and the optics frame may be even better decoupled from the influence of external heat, especially from heat emitted by elements attached to the gas supply frame. Furthermore, a temperature stable environment may be maintained around the optics frame thereby fostering beam stability. The heat shielding element may, e.g., include cooling liquid channels, which may be fed with cooling liquid, e.g., water.

According to a preferred embodiment of the invention, the heat shielding element is configured as a housing in which the optics frame is arranged in. The housing may partially or completely surround the optics frame and the components attached to it.

According to a further preferred embodiment, the heat shielding element may be arranged such as to specifically partially or completely surround one or a plurality of heat generating elements, such as one or a plurality of radio-frequency (RF) electrodes or RF generators of the optical amplifier.

According to a preferred embodiment of the invention, the cavities and, if applicable, the beam guiding elements, are attached to the optics frame such that laser radiation is guided on two levels, wherein a first level is arranged above the centre plane and a second level is arranged below the centre plane. Preferably, the first level and the second level are arranged at the same distance from the virtual centre plane. The beam guiding elements may be arranged such that the laser beam is guided vertically from the first level to the second level or vice versa.

According to a preferred embodiment of the invention, the optics frame has an essentially rectangular, in particular square, layout. Such an essentially rectangular design of the optical frame is advantageous in terms of the thermal expansion of the optical frame and the optical cavities and beam guiding elements of the optical amplifier attached to it. The optical frame can thus thermally expand evenly in at least two spatial directions. Preferably, a first of these spatial directions extends within a vertical plane of symmetry and a second of these spatial directions extends perpendicular to the vertical plane of symmetry, when the optics frame has an essentially rectangular configuration.

According to another aspect of the **invention**, a lithography system, in particular an extreme ultraviolet lithography system, is provided, comprising a drive laser with one or more optical amplifiers as disclosed before.

The lithography system may provide the same technical benefits and advantages as the optical amplifier. Thus, reference is made to the respective description relating to the optical amplifier.

According to another aspect of the **invention** , a method for installing an optical amplifier for a drive laser for use in a lithography system, in particular an extreme ultraviolet lithography system, is disclosed, wherein a base frame is provided and wherein optical cavities, and optionally beam guiding elements, are attached to an optics frame, wherein the optics frame is mounted to the base frame such that a virtual centre plane of the optics frame is arranged essentially horizontally, wherein the optics frame is supported on the base frame via at least three supports, that are arranged at a point within the virtual centre plane of the optics frame.

The method may provide the same technical benefits and advantages as the optical amplifier. Thus, reference is made to the respective description relating to the optical amplifier.

According to a preferred embodiment of the inventive method, prior to mounting the optics frame to the base frame a gas supply frame is connected to the optics frame via decoupling elements, in particular via spring supports.

Alternatively, or additionally, the advantageous embodiments and features disclosed in combination with the inventive optical amplifier can, alone or in combination, be applied to the inventive lithography system and/or method.

Further details and advantages of the invention will be elucidated in the following using the embodiment shown in the figure.
- Fig. 1: depicts a block diagram of an embodiment of an extreme ultraviolet lithography system according to the invention;
- Fig. 2: depicts an exemplary optics frame in a perspective view;
- Fig. 3: depicts an optical amplifier according to a first embodiment of the invention in a schematic sectional view;
- Fig. 4: depicts the optics frame of the optical amplifier shown in Fig. 3 in a schematic sectional view along the virtual centre plane;
- Fig. 5: depicts an optical amplifier according to a second embodiment of the invention in a schematic sectional view, wherein the optics frame is disassembled from the base frame;
- Fig. 6: depicts the optical amplifier of Fig. 3, wherein the optics frame is mounted to the base frame; and
- Fig. 7: depicts the optical amplifier of Fig. 3 and 4, wherein also the gas supply frame is mounted to the base frame.

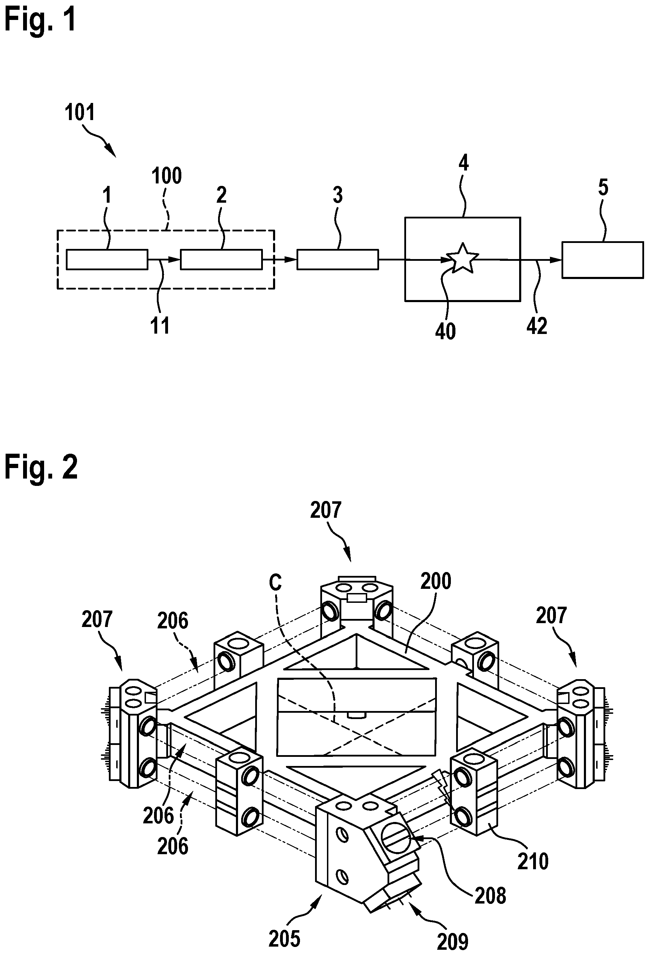

The embodiment in **Fig. 1** shows an extreme ultraviolet, EUV, lithography system 101 with a drive laser 100 that provides laser radiation to a focussing device 3, which focusses the laser radiation 11 onto a target area 40. A target material is arranged in the target area, which emits EUV radiation when irradiated with the laser radiation. According to the exemplary embodiment, the target area 40 is arranged in a target chamber 4 in which vacuum conditions prevail. The target material can be tin, for example, which is provided in drop form. The tin droplet can be heated by a pre-pulse, for example pulsed laser radiation 11 with a wavelength of 1 micron, so that the tin droplet is expanded, vaporised, ionised and/or a weak or possibly strong plasma is generated. A main pulse briefly following the pre-pulse, for example pulsed laser radiation 11 with a wavelength of 10.6 micron, can transfer the essential part of the material influenced by the pre-pulse into the plasma state, whereby the EUV radiation 42 is generated. This EUV radiation 42 is then fed to an exposure device 5 of the lithography system 10, in which the EUV radiation 42 can be used to expose semiconductor substrates.

According to the embodiment, the drive laser 100 comprises a radiation source 1 by means of which, in particular pulsed, laser radiation 11 can be generated. Even if only one radiation source 1 is shown here, two radiation sources 1 can be provided, for example to generate pre-pulses and main pulses of the laser radiation 11, which each follow one another in short succession and are focussed on a target area 40. The laser radiation generated by the radiation source 1 is amplified by an optical amplifier 2. The optical amplifier 2 includes one or more cavities filled with a laser active gas, e.g., comprising CO₂ and N₂ and He. The laser gas may be excited by radio-frequency (RF) signals applied to the laser gas using electrodes.

**Fig. 2** shows an optics frame 200 of an exemplary optical amplifier 2 that can be employed in the drive laser 100 of the lithography system 101 according to Fig. 1. Laser radiation 11 is fed in via an inlet window of interface section 205. The laser radiation 11 is then guided through multiple cavities 206 that are attached to the optics frame 200. For redirecting and guiding the laser radiation 11 between the cavities 206 several beam guiding elements 207 are attached to the optics frame 220, wherein the beam guiding elements include mirrors.

In the embodiment of Fig. 2, the cavities 206 are held between the beam guiding elements 207 and respective centre blocks 210 that serve as inlets and outlets for the laser active gas which is circulated through the cavities 206. The cavities 206 and the beam guiding elements 207 are arranged at the optics frame 200 such that laser radiation 11 is guided on two levels, wherein the laser radiation 11 is fed in on a fist level with respect to a virtual centre plane C of the optics frame 200 and fed out on a second level with respect to said virtual centre plane C. The virtual centre plane C can be considered to include the centre of gravity of the optics frame 200. Preferably, the virtual centre plane C divides the optics frame 200 into two halves of the essentially the same size and/or mass. Thus, the laser radiation 11 is guided on said two levels, wherein said first level is arranged above the centre plane C and said second level is arranged below the centre plane C. The laser radiation 11 may be guided from the first level to the second level using one or more of the optical beam guiding elements 207.

The optics frame 200 has an essentially square layout.

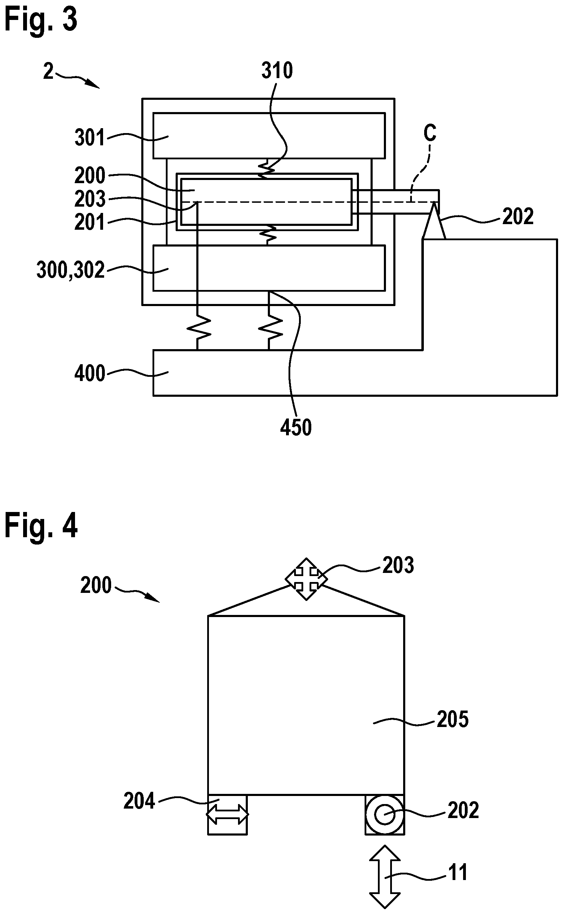

**Fig. 3** depicts an optical amplifier 2 according to a first embodiment of the invention. Here, the optical amplifier 2 includes a base frame 400 that contacts the ground and an optics frame 200 that is attached to the base frame 400. The optics frame 200 is separately suspended from vibrating components like a laser discharge unit and components for supplying the laser gas to the cavities 206. Those vibrating components are attached to a gas supply frame 300 which is supported on the base frame 400 via supports 450 which are separate from the at least three supports 202, 203, 204. Thereby, the optics frame 200 and the components attached to it are decoupled from the vibrations of the gas supply frame 300.

In the embodiment of Fig. 2, the gas supply frame 300 comprises an upper subframe 301 which is arranged vertically above the optics frame 200 and a lower subframe 302 that is arranged vertically below the optics frame 200. A heat shielding element 201 is arranged between the gas supply frame 300 and the optics frame 200 in order to reduce heating of the optics frame 200 by direct convection and/or radiation from elements attached to the gas supply frame 300. Here, the heat shielding element 201 is configured as a housing for the optics frame 200. The heat shielding element 201 is configured for being actively cooled, e.g., using a cooling liquid.

As further depicted in Fig. 2, the virtual centre plane C of the optics frame 200 is arranged essentially horizontally. In order to decrease laser beam drift, the optics frame 200 is supported on the base frame 400 via at least three supports 202, 203, 204 that each are arranged at a point within the virtual centre plane C of the optics frame 200.

In **Fig. 4****,** a schematic sectional view of the optics frame 200 and its suspension is depicted. It can be observed that the three supports 202, 203, 204 comprise exactly one pinned support 202. The pinned support 202 is configured to block translational movements of the optics frame 200 with respect to the base frame 400 in all three directions but allows rotations about all three directions. The pinned support 202 is arranged nearby or in the interface section 205 where the laser radiation 11 is coupled in and out.

The optics frame 200 is further suspended by two supports 203, 204 that allow translational movement of the optics frame 200 with respect to the base frame 400 within the virtual centre plane C. One support 204 of those supports is configured to allow translational movement within the virtual centre plane C only along one direction.

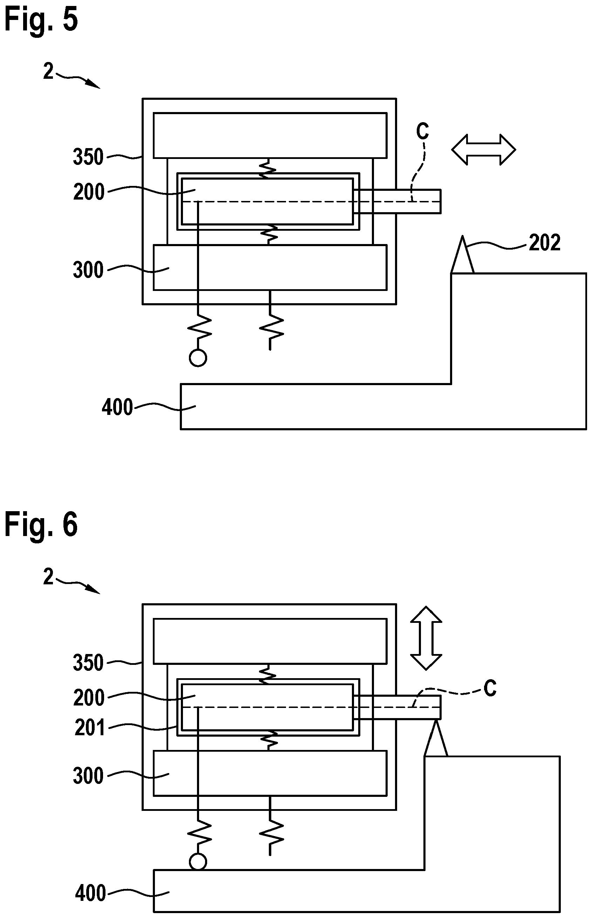

In the following an embodiment of a method for installing an optical amplifier 2 for a drive laser 100 for use in a lithography system 101, in particular an extreme ultraviolet lithography system, will be elucidated with reference to **Fig. 5, 6** **and** **7****.**

**Fig. 5** depicts a situation wherein the optics frame 200 is disassembled from the base frame 400. In a first step, prior to mounting the optics frame 200 to the base frame 400, the gas supply frame 300 is connected to the optics frame 200 via decoupling elements 310, in particular via spring supports, wherein the decoupling elements 310 are only provided with reference signs in Fig. 3. Thereby, the optics frame 200 and the gas supply frame 300 are provided as a mounting unit 350.

Then, as depicted in **Fig. 6****,** the optics frame 200 is mounted to the base frame 400 such that the virtual centre plane C of the optics frame 200 is arranged essentially horizontally, wherein the optics frame 200 is supported on the base frame 400 via at least three supports 202, 203, 204, that are arranged at a point within the virtual centre plane C of the optics frame.

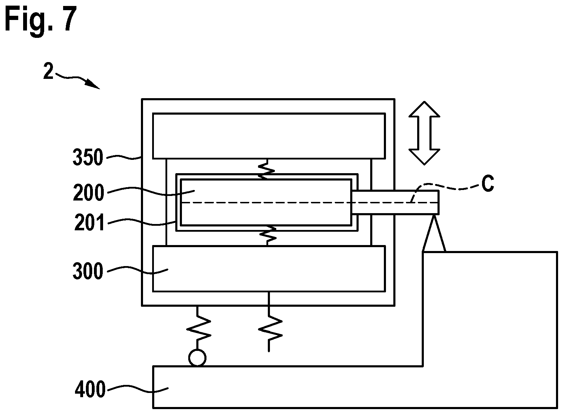

As depicted in **Fig. 7****,** in a step following the mounting of the optics frame 200 to the base frame 400, the gas supply frame 300 is mounted to the base frame 400.

### Reference Signs:

- 1: laser radiation source
- 2: optical amplifier
- 3: focussing device
- 4: target chamber
- 5: exposure device
- 11: laser radiation
- 40: target area
- 42: EUV radiation

- 101: EUV system

- 200: optics frame
- 201: housing
- 202: support
- 203: support
- 204: support
- 205: interface section
- 206: cavity
- 207: beam guiding element
- 208: inlet window
- 209: outlet window
- 210: centre block
- 300: gas supply frame
- 310: decoupling element
- 350: mounting unit
- 400: base frame
- C: virtual centre plane

## Claims

1. Optical amplifier (2) for a drive laser (100) for use in a lithography system (101), in particular an extreme ultraviolet lithography system,
with a base frame (400) and
with an optics frame (200) to which optical cavities, and optionally beam guiding elements, are attached, wherein the optics frame (200) has a virtual centre plane (C) that is arranged essentially horizontally,
**characterized in that**
the optics frame (200) is supported on the base frame (400) via at least three supports (202, 203, 204) each that are arranged at a point within the virtual centre plane (C) of the optics frame (200).

2. Optical amplifier according to claim 1, **characterized in that** the at least three supports (202, 203, 204) comprise exactly one pinned support (202).

3. Optical amplifier according to claim 2, **characterized in that** the optics frame (200) comprises an interface section (205) that is configured to couple laser radiation (11) in and out, wherein the pinned support (202) is arranged nearby or in the interface section (205).

4. Optical amplifier according to any of the preceding claims, **characterized in that** the at least three supports (202, 203, 204) comprise two supports that allow translational movement of the optics frame with respect to the base frame within the virtual centre plane.

5. Optical amplifier according to claim 4, **characterized in that** the two supports (203, 204) that allow translational movement of the optics frame (200) with respect to the base frame (400) within the virtual centre plane (C) comprise one support (204) that allows translational movement within the virtual centre plane (C) only along one direction.

6. Optical amplifier according to any of the preceding claims, **characterized in that** it comprises a gas supply frame (300) to which components for supplying laser gas to the optical cavities are attached, wherein the gas supply frame (300) is supported on the base frame (400) via supports separate from the at least three supports (202, 203, 204).

7. Optical amplifier according to claim 5, **characterized in that** the gas supply frame (300) comprises an upper subframe (301) arranged vertically above the optics frame (200) and a lower subframe (302) arranged vertically below the optics frame (200).

8. Optical amplifier according to any of claims 5 or 6, **characterized in that** a heat shielding (201) element is arranged between the gas supply frame (300) and the optics frame (200) which is configured to reduce heating of the optics frame (200) by direct convection and/or radiation.

9. Optical amplifier according to claim 8, **characterized in that** the heat shielding element (201) is configured for being actively cooled.

10. Optical amplifier according to any of the preceding claims, **characterized in that** the heat shielding element (201) is configured as a housing in which the optics frame (200) is arranged in.

11. Optical amplifier according to any of the preceding claims, **characterized in that** the cavities and, if applicable, the beam guiding elements, are attached to the optics frame (200) such that laser radiation (11) is guided on two levels, wherein a first level is arranged above the centre plane (C) and a second level is arranged below the centre plane (C).

12. Optical amplifier according to any of the preceding claims, **characterized in that** the optics frame (200) has an essentially rectangular, in particular square, layout.

13. Lithography system (101), in particular extreme ultraviolet lithography system, comprising a drive laser (100) with one or more optical amplifiers (2) according to any of the preceding claims.

14. Method for installing an optical amplifier for a drive laser for use in a lithography system (101), in particular an extreme ultraviolet lithography system,
wherein a base frame (400) is provided and
wherein optical cavities, and optionally beam guiding elements, are attached to an optics frame (200),
wherein the optics frame (200) is mounted to the base frame (400) such that a virtual centre plane (C) of the optics frame (200) is arranged essentially horizontally,
wherein the optics frame (200) is supported on the base frame (400) via at least three supports (202, 203, 204), that are arranged at a point within the virtual centre plane (C) of the optics frame (200).

15. Method according to claim 14, wherein prior to mounting the optics frame (200) to the base frame (400) a gas supply frame (300) is connected to the optics frame (200) via decoupling elements (310), in particular via spring supports.
